# EUROPÄISCHE PATENTSCHRIFT

(11) **EP 1 851 041 B1**
(45) Veröffentlichungstag und Bekanntmachung des Hinweises auf die Patenterteilung: **15.08.2012**
(21) Anmeldenummer: 06701643.6
(22) Anmeldetag: 26.01.2006
(51) Int. Cl.: B29D 30/26, B29D 30/48

(54) **Verfahren zum Aufwickeln und Spleissen eines Reifenaufbauteiles mit einer im Querschnittsprofil variierenden Materialdicke**
Method for winding up and splicing a structural tire part having a material thickness that varies from the perspective of the cross-sectional profile thereof
Procede pour enrouler et raccorder un composant de pneumatique ayant une epaisseur de matiere qui varie selon le profil de la section

(30) Priorität: 10.02.2005 DE 102005006076
(43) Veröffentlichungstag der Anmeldung: 07.11.2007
(73) Patentinhaber: Continental Reifen Deutschland GmbH, 30165 Hannover (DE)
(72) Erfinder: GERIGHAUSEN, Martin, 30890 Barsinghausen (DE)
(74) Vertreter: Finger, Karsten
(86) Internationale Anmeldenummer: PCT/EP2006/000674
(87) Internationale Veröffentlichungsnummer: WO 2006/084581

(56) Entgegenhaltungen:
- EP-A- 1 418 043
- US-A- 3 895 986
- US-A- 4 547 251
- US-A- 4 614 562
- US-A- 4 795 522
- PATENT ABSTRACTS OF JAPAN Bd. 2002, Nr. 11, 6. November 2002 (2002-11-06) & JP 2002 187218 A (YOKOHAMA RUBBER CO LTD:THE), 2. Juli 2002 (2002-07-02)

## Beschreibung

Die Erfindung betrifft ein Verfahren zum Aufwickeln und Spleißen eines Reifenaufbauteiles mit einer im Querschnittsprofil variierenden Materialdicke, gemäß dem Oberbegriff des Patentanspruchs 1.

Bei der Reifenherstellung werden Reifenaufbauteile auf eine Wickeltrommel aufgewickelt und anschließend zu einem ringförmigen Bauteil zusammengespleißt. In der US 3,895,986 ist zum Beispiel ein Aufwickeln eines Kemprofiles dargestellt, wobei diese Druckschrift die Herstellung eines Kemverbandes aus Kemprofil und Wulstkern betrifft. Beim Wickeln und dem anschließenden automatischen Spleißen von streifenförmigen Reifenbauteilen tritt immer wieder das Problem auf, dass das Material über die Breite gesehen ungleichmäßig schrumpft. Dies gilt insbesondere für so genannte Kemprofile, die ein im Querschnitt dreieckiges Profil besitzen. Derzeit wird bei automatischen Anlagen zum Wickeln von streifenförmigen Reifenaufbauteilen der ungleichmäßige Schrumpf mittels einer Reckvorrichtung oder durch eine manuelle Spleißkorrektur kompensiert. Die Reckvorrichtung ist relativ aufwändig in der Herstellung und die manuelle Spleißkorrektur steht einer Automatisierung entgegen.

Die EP-A-4 614 562, US-A- 4 614 562, US-A-4 547 251, US- A-4 795 522 und JP-A-2002187218 offenbaren weitere Vorrichtungen zur Herstellung von Bauteilen für Fahrzeugreifen.

Der Erfindung lag die Aufgabe zugrunde, ein Verfahren bereitzustellen, mit dem auf eine einfache Weise das Aufwickeln und Zusammenspleißen eines Reifenaufbauteiles mit einer im Querschnittsprofil variierenden Materialdicke erfolgt.

Gelöst wird die Aufgabe durch ein Verfahren nach Anspruch 1.

Vorteilhafte weiterbildungen der Erfindung sind Gegenstand der abhängigen Ansprüche.

Ein Vorteil der Erfindung ist insbesondere darin zu sehen, dass durch das erfindungsgemäße Verfahren das Aufwickeln und Zusammenspleißen des Reifenaufbauteiles auf eine einfache Weise erfolgt, wodurch dieser Prozess einfach automatisiert werden kann. Durch die neigungsverstellbare Oberfläche werden Materialschrumpfungen über den Umfang des Reifenaufbauteiles ausgeglichen, da diese Oberfläche eine variierende Umfangslänge bzw. einen variierenden Durchmesser besitzt. Dadurch werden Umfangsverkürzungen, die aufgrund der Materialeigenschaften des Reifenaufbauteiles auftreten, kompensiert, wodurch die gegenüberliegenden freien Enden des Reifenaufbauteiles ohne jegliche Reckvorrichtungen direkt übereinander liegen und zusammengespleißt werden können.

In einer vorteilhaften Weiterbildung der Erfindung ist vorgesehen, dass das Reifenaufbauteil ein Kemprofil mit einem im Wesentlichen dreieckigen Querschnittsprofil ist. Aufgrund des dreieckigen Querschnittsprofiles des Kemprofiles treten bei diesem Bauteil relativ große Materialschrumpfungen auf.

In einer weiteren vorteilhaften Weiterbildung der Erfindung ist vorgesehen, dass die neigungsverstellbare Oberfläche rotationssymetrisch zur Hauptachse der Wickeltrommel ist und zu dieser Hauptachse konisch zusammenläuft. Die konische Form der neigungsverstellbaren Oberfläche hat einen optimalen Ausgleich der Materialschrumpfungen zur Folge.

Es ist vorgesehen, dass die neigungsverstellbare Oberfläche durch einen Verstellring justiert wird. Über den Verstellring kann eine beliebige Feinjustierung auf eine einfache Art und Weise vorgenommen werden.

Es ist vorgesehen, dass der Verstellring über eine Gewindeverbindung die Neigung der neigungsverstellbaren Oberfläche einstellt. Die Gewindeverbindung lässt sich innerhalb der Wickeltrommel auf eine einfache Art und Weise realisieren.

In einer weiteren vorteilhaften Weiterbildung der Erfindung ist vorgesehen, dass die neigungsverstellbare Oberfläche durch Klappsegmente gebildet wird und die Klappsegemente synchron in ihrer Neigung verstellt werden. Die synchrone Verstellung der Klappsegmente besitzt den Vorteil, dass bei einer Justierung alle Klappsegmente den gleichen Neigungswinkel aufweisen.

In einer weiteren vorteilhaften Weiterbildung der Erfindung ist vorgesehen, dass der Neigungswinkel der neigungsverstellbaren Oberfläche in einem Bereich von kleiner als 10° liegt. Dieser Winkelbereich hat sich für das dreieckige Kemprofil als besonders vorteilhaft erwiesen.

Anhand eines Ausführungsbeispiels soll die Erfindung näher erläutert werden. Es zeigen:
- Fig. 1: eine Schnittdarstellung der Wickeltrommel zum Aufwickeln eines Kemprofiles und
- Fig. 2: eine Schnittdarstellung der Wickeltrommel, wobei die neigunsverstellbare Oberfläche durch den Verstellring in ihrer Neigung verstellt wurde.

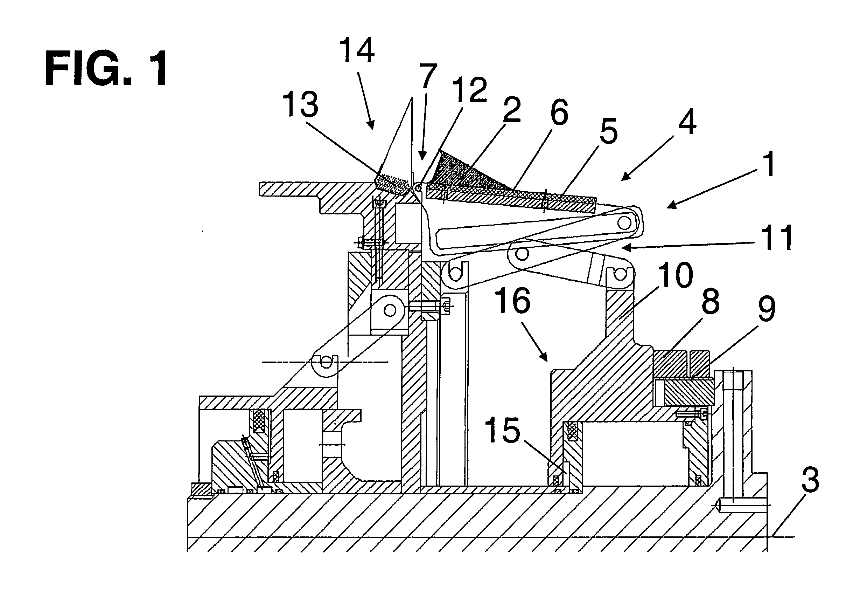

Die Figur 1 zeigt eine Schnittdarstellung der Wickeltrommel 1 zum Aufwickeln eines Kemprofiles 2. Die Wickeltrommel 1, insbesondere die dargestellten Bauteile sind rotationssymmetrisch zur Hauptachse 3 der Wickeltrommel 1. Das Kemprofil 2 besteht aus einem Elastomerwerkstoff und besitzt eine im Querschnittsprofil variierende Materialdicke, wobei das dreieckige Querschnittsprofil im liegenden Zustand auf den Klappsegmenten 4 aufgewickelt wird. Das Kernprofil 2 wird über einen Servicer der Wickeltrommel 1 zugeführt und anschließend auf einem Klappsegment aufgelegt. Anschließend erfolgt der Vorgang des Aufwickelns, indem die Wickeltrommel 1 um die Hauptachse 3 rotiert. Nach einem Ablängen des Kemprofiles 2 in Form eines Doppelschrägschnittes werden beide freie Enden des Kemprofiles 2 auf der Wickeltrommel 1 verbunden bzw. zusammengespleißt, so dass das Kemprofil 2 als geschlossener Ring vorliegt. Die Klappsegmente 4, wobei in der Figur nur ein Klappsegment dargestellt ist, bilden über deren äußeren Umfang die neigungsverstellbare Oberfläche 5. Diese Oberfläche ist rotationssymmetrisch zur Hauptachse 3 und besitzt eine dreidimensionale konische Oberfläche. Durch die geneigte Oberfläche wird der Wickelumfang im Bereich der Spitze 6 des Kemprofiles 2 kleiner, wodurch Durchmesserdifferenzen des gesamten Kernprofiles 2 ausgeglichen werden. Diese Durchmesserdifferenzen des Kernprofiles 2 kommen durch Materialschrumpfungen zustande, die einen kleineren Durchmesser an der Spitze 6 als an der gegenüber liegenden Materialverdickung 7 des Kemprofiles 2 bewirken. Die über den Umfang des Kernprofiles 2 resultierende Materialschrumpfung ist insbesondere auf die plastisch-elastischen Materialeigenschaften und die variierende Materialdicke des Kernprofiles 2 zurückzuführen. Diese Faktoren haben zur Folge, dass das Kernprofil 2 über den Umfang an der Spitze 6 mehr zusammenschrumpft als an der gegenüberliegenden Materialverdickung 7. Die neigungsverstellbare Oberfläche wird nunmehr so in ihrem Neigungswinkel gegenüber der Hauptachse 3 eingestellt, dass die Materialschrumpfung ausgeglichen wird. Auf diese Weise können die freien Materialenden des Kernprofiles 2 im Wesentlichen planparallel ohne zusätzliche Reckvorrichtungen in einen automatisierten Prozess übereinandergelegt und anschließend zusammengespleißt werden. Die neigungsverstellbare Oberfläche wird über den Verstellring 8 justiert, der ebenfalls rotationssymmetrisch zur Hauptachse 3 angeordnet ist. Durch eine Drehbewegung wird der Verstellring 8 über eine Gewindeverbindung 9 parallel zur Hauptachse 3 verfahren, wodurch das Bauteil 10 ebenfalls parallel zur Hauptachse 3 bewegt wird. Auf diese Weise wird der Klappmechanismus 11 dermaßen bewegt, dass die Neigung der Oberfläche 5 über den Drehpunkt 12 verstellt wird, wodurch ein steilerer oder flacherer Neigungswinkel eingestellt wird. Nach dem Aufwickeln und Spleißen des Kemprofiles 2 erfolgt das Hochschlagen mittels der Klappsegmente 4, die ein Aufrichten des Kemprofiles 2 bewirken und dabei gleichzeitig das Kernprofil 2 mit dem Wulstkern 13 verbinden, so dass der dargestellte Kemverband 14 hergestellt wird. Das Hochschlagen der Klappsegmente 4 erfolgt über das Einblasen von Druckluft in den Hohlraum 15 des pneumatischen Zylinders 16.

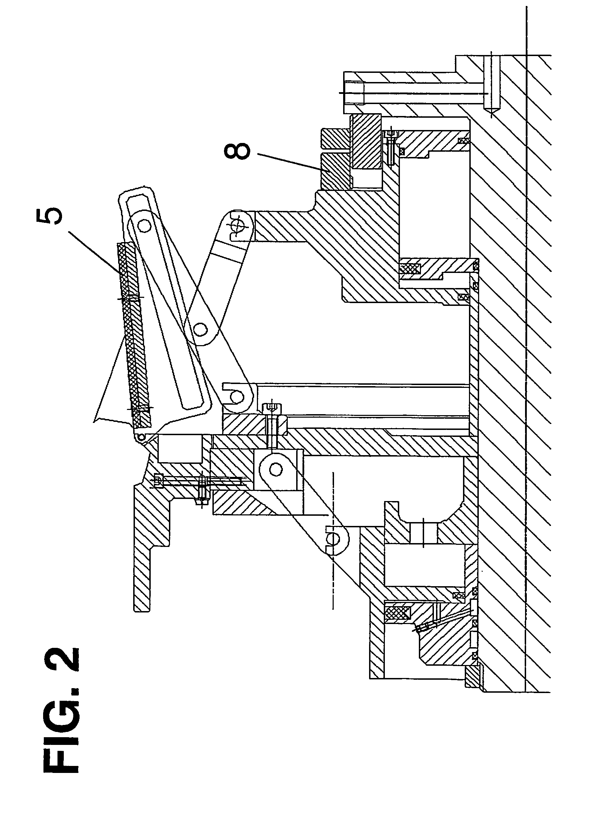

Die Figur 2 zeigt den Verstellring 8 in einer der Figur nach links verstellten Position, wodurch der Neigungswinkel der Oberfläche 5 verändert wird. Der Neigungswinkel der Oberfläche 5 kann durch den Verstellring 8 fein justiert werden, wobei die optimale Einstellung u.a. von Materialparametern des Kernprofiles 2 abhängig ist.

### Bezugszeichenliste

- 1: Wickeltrommel
- 2: Kernprofil
- 3: Hauptachse der Wickeltrommel
- 4: Klappsegmente
- 5: Neigungsverstellbare Oberfläche
- 6: Spitze des Kernprofiles
- 7: Materialverdickung des Kernprofiles
- 8: Verstellring
- 9: Gewindeverbindung
- 10: Bauteil
- 11: Klappmechanismus
- 12: Drehpunkt
- 13: Wulstkern
- 14: Kernverband
- 15: Hohlraum
- 16: Pneumatischer Zylinder

## Patentansprüche

1. Verfahren zum Aufwickeln und Spleißen eines Reifenaufbauteiles (2) mit einer im Querschnittsprofil variierenden Materialdicke, mit folgenden Schritten:
- Auflegen des Reifenaufbauteiles (2) auf eine Wickeltrommel (1) mit einer zur Hauptachse (3) der Wickeltrommel (1) neigungsverstellbaren Oberfläche (5) zum Ausgleich von ungleichmäßigen Materialschrumpfungen des Reifenaufbauteiles (2),
- Rotation der Wickeltrommel (1) zum rotationssymmetrischen Aufwickeln des Reifenaufbauteiles (2) und
- Zusammenspleißen der beiden freien Enden des Reifenaufbauteiles (2) zu einem geschlossenen Ring,
**dadurch gekennzeichnet, dass**,
die neigungsverstellbare Oberfläche (5) durch einen Verstellring (8) justiert wird, wobei der Verstellring (8) über eine Gewindeverbindung (9) die Neigung der neigungsverstellbaren Oberfläche (5) einstellt.

2. Verfahren nach Anspruch 1,
**dadurch gekennzeichnet, dass**
das Reifenaufbauteil ein Kemprofil (2) mit einem im Wesentlichen dreieckigen Querschnittsprofil ist.

3. Verfahren nach Anspruch 1 oder 2,
**dadurch gekennzeichnet, dass**
die neigungsverstellbare Oberfläche (5) rotationssymmetrisch zur Hauptachse (3) der Wickeltrommel ist und zu dieser Hauptachse (3) konisch zusammenläuft.

4. Verfahren nach einem der Ansprüche 1 bis 3,
**dadurch gekennzeichnet, dass**
die neigungsverstellbare Oberfläche (5) durch Klappsegmente (4) gebildet wird und die Klappsegemente (4) synchron in ihrer Neigung verstellt werden.

5. Verfahren nach einem der Ansprüche 1 bis 4,
**dadurch gekennzeichnet, dass**
der Neigungswinkel der neigungsverstellbaren Oberfläche (5) in einem Bereich von kleiner als 10° liegt.

## Claims

1. Method for winding up and splicing a tire building component (2) having a material thickness that varies in cross-sectional profile, comprising the following steps:
- placing the tire building component (2) on a winding drum (1) having a surface (5) which can be adjusted in its inclination in relation to the main axis (3) of the winding drum (1) to compensate for uneven material shrinkages of the tire building component (2),
- rotating the winding drum (1) for rotationally symmetrical winding up of the tire building component (2) and
- splicing together the two free ends of the tire building component (2) to form a closed ring, **characterized in that** the surface (5) which can be adjusted in its inclination is adjusted by an adjusting ring (8),
wherein the adjusting ring (8) sets the inclination of the surface (5) which can be adjusted in its inclination by means of a threaded connection (9).

2. Method according to Claim 1, **characterized in that** the tire building component is a bead filler (2) with a substantially triangular cross-sectional profile.

3. Method according to Claim 1 or 2, **characterized in that** the surface (5) which can be adjusted in its inclination is rotationally symmetrical in relation to the main axis (3) of the winding drum and tapers conically toward this main axis (3).

4. Method according to one of Claims 1 to 3, **characterized in that** the surface (5) which can be adjusted in its inclination is formed by pivoting segments (4) and the pivoting segments (4) are adjusted synchronously in their inclination.

5. Method according to one of Claims 1 to 4, **characterized in that** the angle of inclination of the surface (5) which can be adjusted in its inclination lies in a range of less than 10°.

## Revendications

1. Procédé d'enroulement et d'épissure d'une partie (2) de formation de bandage de roue dont la section transversale présente un profil dans lequel l'épaisseur de matière varie, le procédé comportant les étapes suivantes :
- pose de la partie (2) de formation de bandage de roue sur un tambour d'enroulement (1) de telle sorte que l'inclinaison d'une surface (5) par rapport à l'axe principal (3) du tambour d'enroulement (1) puisse être ajustée de manière à compenser des retraits irréguliers du matériau de la partie (2) de formation de bandage de roue,
- mise en rotation du tambour d'enroulement (1) de manière à enrouler la partie (2) de formation de bandage de roue d'une manière symétrique en rotation et
- épissure des deux extrémités libres de la partie (2) de formation de bandage de roue pour former un anneau fermé,
**caractérisé en ce que**
la surface (5) à inclinaison ajustable est ajustée par une bague d'ajustement (8), la bague d'ajustement (8) établissant l'inclinaison de la surface (5) à inclinaison ajustable par l'intermédiaire d'une liaison filetée (9).

2. Procédé selon la revendication 1, **caractérisé en ce que** la partie de formation de bandage de roue est un profil d'âme (2) dont la section transversale a un profil essentiellement triangulaire.

3. Procédé selon les revendications 1 ou 2, caractérisé en que la surface (5) à inclinaison ajustable est symétrique en rotation par rapport à l'axe principal (3) du tambour d'enroulement et converge coniquement vers cet axe principal (3).

4. Procédé selon l'une des revendications 1 à 3, **caractérisé en ce que** la surface (5) à inclinaison ajustable est formée de segments rabattables (4) et **en ce que** les segments rabattables (4) ont leur inclinaison ajustée de manière synchronisée.

5. Procédé selon l'une des revendications 1 à 4, **caractérisé en ce que** l'angle d'inclinaison de la surface (5) à inclinaison ajustable est situé dans une plage d'angles inférieure à 10°.
